# FASCICULE DE BREVET EUROPEEN

(11) **EP 1 297 666 B1**
(45) Date de publication et mention de la délivrance du brevet: **24.05.2006**
(21) Numéro de dépôt: 02735464.6
(22) Date de dépôt: 19.04.2002
(51) Int. Cl.: H04L 12/56, H04Q 11/04, H04L 29/06

(54) **PROCEDE DE GESTION D'UNE LISTE DE PAQUETS DANS UN PORT DE SORTIE D'UN COMMUTATEUR DE PAQUETS**
VERFAHREN ZUR STEUERUNG EINER LISTE VON PAKETEN IN EINEM AUSGANGSPORT EINER PAKET-VERMITTLUNGSTELLE
METHOD FOR MANAGING A LIST OF PACKETS IN AN OUTPUT PORT OF A PACKET SWITCH

(30) Priorité: 24.04.2001 FR 0105509
(43) Date de publication de la demande: 02.04.2003
(73) Titulaire: Thales, 75008 Paris (FR)
(72) Inventeur: LOGE, Alain, Thales Intellectual Property, F-94117 Arcueil cedex (FR)
(74) Mandataire: Beylot, Jacques
(86) Numéro de dépôt international: PCT/FR2002/001356
(87) Numéro de publication internationale: WO 2002/087174

(56) Documents cités:
- EP-A- 0 680 173
- US-A- 5 535 202
- HASHEMI M R ET AL: "A general purpose cell sequencer/scheduler for ATM switches" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, 7 avril 1997 (1997-04-07), pages 29-37, XP010251989 ISBN: 0-8186-7780-5
- CHAO H J: "A novel architecture for queue management in ATM networks" COUNTDOWN TO THE NEW MILENNIUM. PHOENIX, DEC. 2 - 5, 1991, PROCEEDINGS OF THE GLOBAL TELECOMMUNICATIONS CONFERENCE. (GLOBECOM), NEW YORK, IEEE, US, vol. 3, 2 décembre 1991 (1991-12-02), pages 1611-1618, XP010042597 ISBN: 0-87942-697-7

## Description

La présente invention est relative aux réseaux de transmission à commutations par paquets et plus particulièrement à la gestion des listes de paquets en attente dans les ports d'émission des commutateurs de paquets appartenant à ces réseaux.

Un réseau de transmission à commutation par paquets est généralement désigné par réseau ATM, le sigle provenant de l'anglo-saxon "Asynchronous Transfert Mode", ou par réseau ethernet commuté. Il est constitué d'un ensemble de noeuds d'interconnexion dits par la suite "commutateurs de paquets", réunis par des liaisons de transmission câblées ou non, constituant un maillage de l'espace où sont réparties les entités ayant à communiquer entre elles au travers du réseau.

Pour être transmis sur un réseau ATM ou ethernet, un message doit subir deux mises en formes successives. Il doit tout d'abord être numérisé et mis sous la forme d'une suite de données binaires répartie en un ou plusieurs paquets successifs, chaque paquet de données binaires de message étant complété, en préambule, par des données binaires de service renfermant diverses consignes utiles à son routage au sein des commutateurs de paquets traversés. Puis ces paquets doivent eux-mêmes être mis sous forme de signaux de transmission électriques ou optiques adaptés aux caractéristiques physiques des liaisons de transmission interconnectant les commutateurs de paquets entre eux et avec les entités raccordées au réseau.

Les liaisons de transmission interconnectant les commutateurs de paquets et les entités raccordées au réseau peuvent être mono ou bidirectionnelles. Pour chaque sens de transmission, elles partent d'un port de sortie équipant un commutateur de paquets ou une entité connectée au réseau et aboutissent à un port d'entrée équipant également un commutateur de paquets ou une entité connectée au réseau.

Les commutateurs de paquets assurent le routage des paquets qui leur parviennent par les liaisons de transmission aboutissant directement à leurs différents ports d'entrée, en direction des liaisons de transmission partant de leurs différents ports de sortie, de manière à les rapprocher de leurs destinations finales. Ce routage nécessite une démodulation des signaux de transmission reçus pour récupérer les paquets sous une forme de suites de données binaires aptes à un traitement numérique, la détermination d'un profil de routage pour chaque paquet reçu qui consiste à identifier le ou les ports de sortie du commutateur de paquets sur lesquels le paquet considéré doit être réémis, et une remodulation du paquet au niveau des ports de sortie élus pour son insertion sur les liaisons de transmission partant de ces ports de sortie.

Plusieurs paquets reçus sur différents ports d'entrée d'un commutateur de paquets peuvent se présenter quasi-simultanément pour être réémis dans la foulée par un même port de sortie. Comme ils ne peuvent emprunter une même liaison de transmission que l'un à la suite de l'autre, leurs arrivées à l'improviste sur une courte période de temps au niveau du port de sortie peuvent provoquer des embouteillages de paquets au départ de la liaison de transmission partant de ce port de sortie.

La nécessité pour un commutateur de paquets de faire face, en fonctionnement normal, à l'éventualité d'embouteillage, donc de paquets en attente de réémission au niveau de ses ports de sortie, sans perte de paquets et celle de s'accorder un certain temps de traitement entre la réception et la réémission d'un paquet pour effectuer sur ce paquet différentes opérations de traitement dont l'établissement, à partir des données binaires de service qu'il renferme, de son profil de diffusion et, éventuellement, une ou plusieurs vérifications d'intégrité, font qu'il est habituel de pourvoir un commutateur de paquets, d'une mémoire tampon constituée de plusieurs mémoires circulantes stockant, sur une courte durée, les trafics de message arrivant sur ses ports d'entrée et de gérer, au niveau des ports de sortie des listes d'attente répertoriant les paquets en attente de réémission.

Ces listes d'attente stockent des identificateurs de paquet qui font référence à chacun des paquets en attente de réémission et qui rassemblent chacun, sous une forme explicite ou implicite, l'adresse de la mémoire circulante contenant le paquet référencé, au sein de cette mémoire circulante, l'adresse du début du paquet référencé et diverses autres informations utiles sur le paquet référencé dont souvent, sa date de réception par le commutateur de paquets si elle ne peut pas être déduite de son positionnement dans une mémoire circulante, et un éventuel un niveau de consigne de priorité fonction de la voie virtuelle sur laquelle chemine le paquet.

Au départ d'une voie virtuelle reliant deux entités au travers d'un réseau de transmission à commutation par paquet, les paquets sont en général émis à une cadence régulière mais la régularité de succession des paquets se dégrade au cours de leur progression le long de la voie virtuelle en raison des conditions variables d'embouteillage qu'ils rencontrent dans leurs traversées des commutateurs de paquets empruntés par la voie virtuelle considérée. Cette dégradation de la régularité de succession des paquets au cours de leur progression le long d'une voie virtuelle est désignée sous le terme de gigue. Cette gigue s'accroît avec le nombre de commutateurs de paquets traversés. Comme un même commutateur de paquets n'est pas vu sous le même numéro d'ordre de succession par les voies virtuelles qui le traversent, les paquets qu'il traite sont affectés de gigues différentes, fonction des voies virtuelles qu'ils empruntent. Selon la position du commutateur de paquets sur une voie virtuelle, la gigue prévisible peut être plus ou moins proche du maximum de tolérance admis. Ainsi, pour respecter les tolérances de gigue, il peut être utile, au sein d'un commutateur de paquets, de rendre les paquets de certaines voies virtuelles prioritaires par rapport à d'autres lorsqu'ils sont en attente de réémission.

Actuellement, lorsqu'il y a un niveau de priorité, il est habituel de fractionner une liste d'attente en plusieurs listes partielles d'attente, une par niveau de priorité et de vider les listes partielles d'attentes à la manière des mémoires FIFO, en s'intéressant d'abord à celle affectée au niveau de priorité le plus élevé et en traitant les autres dans l'ordre des priorités décroissantes chaque fois que les traitements des listes partielles d'attente affectées à des niveaux plus prioritaires en laisse le temps.

Un des inconvénients de cette méthode de gestion de liste d'attente réside dans le fait que l'on ne peut pas prévoir a priori les niveaux de priorité des paquets susceptibles de faire partie de la liste d'attente et que l'on est donc obligé de donner à chacune des listes partielles d'attente la même capacité maximale que dans le cas d'une seule liste, ce qui conduit à affecter à la gestion d'une liste d'attente avec prise en compte de niveaux de priorité, une quantité de mémoire très supérieure à celle qui serait nécessaire en l'absence de prise en compte des niveaux de priorité. Or cette quantité de mémoire est à réserver pour chacun des ports de sortie d'un commutateur de paquets.

Par ailleurs, on connaît par l'article de Hashemi M. R. et al. intitulé :"A General Purpose Cell Sequencer/Scheduler for ATM Switches" INFOCOM 97.Sixteenth Annual Joint Conference of the IEEE Computer and Communications Societies. Driving the Information Revolution. Proceedings IEEE KOBE, Japan 7-11 April 1997, LOS ALAMITOS, CA, USA, IEEE COMPUT. Soc., US, 7 avril 1997 (1997-04-07), pages 29-2-37, XP01251989 ISBN:O-8186-7780-5, une méthode de gestion de files d'attente au niveau des ports d'entrée ou de sortie de commutateurs de paquets de type ATM qui prend en compte des niveaux de priorité et qui est basée sur un réarrangement dynamique de la file d'attente consistant à insérer chaque identificateur de paquet nouvellement arrivé à la bonne place dans la file d'attente compte tenu de son niveau de priorité.

Cette méthode de gestion de file d'attente basée sur un réordonnancement de la file d'attente à chaque arrivée de paquet implique un grand nombre de manipulations de la file d'attente.

La présente invention a pour but de lutter contre ces inconvénients et de permettre une gestion de liste de paquets en attente de réémission dans un port de sortie d'un commutateur de paquets acceptant une prise en compte de niveaux de priorité tout en utilisant une quantité de mémoire du même ordre que pour la gestion d'une liste d'attente sans prise en compte de niveaux de priorité.

Elle a également pour but de permettre une gestion de liste de paquets en attente de réémission dans un port de sortie d'un commutateur de paquets permettant une élimination facile des doublons, un paquet ne devant être réémis qu'une seule fois par un même port de sortie de commutateur de paquets.

Elle a pour objet un procédé de gestion d'une liste de paquets en attente de réémission dans un port de sortie d'un commutateur de paquets après avoir été reçus, mis temporairement dans une mémoire tampon par ledit commutateur de paquets et répertoriés à l'aide d'identificateurs donnant, de manière explicite ou implicite l'adresse de leur début d'enregistrement dans la mémoire tampon et leur niveau de priorité. Ce procédé est remarquable en ce qu'il consiste à simultanément effectuer les tâches suivantes :
- première tâche :
   mettre les identificateurs de paquets en attente d'émission par le port de sortie à la suite les uns des autres et dans l'ordre de leurs arrivées au port de sortie, dans une file de traitement stockée dans une mémoire de liste d'attente,
- seconde tâche :
   1-initialiser un banc de registres de travail, référencé ci dessous sous l'appellation RD, avec l'identificateur du paquet le plus récemment admis dans la file de traitement,
   2- effectuer la boucle de recherche suivante (étapes 2.1 à 2.4) tant que le début de la file de traitement n'a pas été atteint :
      2.1- sélectionner dans la file de traitement l'identificateur de paquet précédent immédiatement celui sélectionné au cours de la boucle précédente,
      2.2- comparer la priorité dudit identificateur de paquet lu dans la file de traitement avec celle de l'identificateur de paquet contenu dans RD,
      2.3- si la priorité dudit identificateur de paquet lu dans la file de traitement est supérieure ou égale à celle de l'identificateur de paquet contenu dans RD, écrire l'identificateur de paquet stocké dans RD dans la file d'attente immédiatement avant ledit identificateur de paquet lu et charger dans RD ledit identificateur de paquet lu,
      2.4- si la priorité dudit identificateur de paquet lu dans la file de traitement est strictement inférieure à celle de l'identificateur de paquet contenu dans RD, écrire ledit identificateur de paquet lu dans la file de traitement immédiatement avant lui-même,
   3- présenter l'identificateur de paquet stocké dans RD comme correspondant au paquet à faire réemettre en priorité par le port de sortie concerné,
   4- attendre la prise en compte, par le port de sortie, de l'identifiant de paquet contenu dans RD,
   5- recommencer les étapes 1 à 4 de la seconde tâche tant que la file de traitement n'est pas vide.

Avantageusement, la comparaison du niveau de priorité de deux identificateurs de paquets sélectionnés dans la file de traitement est précédée d'un test d'identité conduisant, si les deux identificateurs de paquets se révèlent identiques, à éluder la comparaison de niveau de priorité et résoudre le doublon ainsi détecté en supprimant l'identificateur de paquet déjà présent dans le banc de registres de travail de la file de traitement stockée dans la mémoire de liste d'attente.

Avantageusement, lorsque les identificateurs de paquets renferment une information sur la date de réception des paquets par le commutateur de paquets, la comparaison du niveau de priorité de deux identificateurs de paquets sélectionnés dans la file de traitement est précédée d'un test d'ancienneté de réception, par le commutateur de paquets, du paquet dont l'identificateur est lu dans la file de traitement conduisant, si le paquet se révèle trop ancien, à éluder la comparaison de niveau de priorité et à l'exclure de la file de traitement stockée dans la mémoire de liste d'attente.

Avantageusement, la population de la file de traitement stockée dans la mémoire de liste d'attente est recensée en temps réel et comparée à un seuil maximum au delà duquel aucun nouveau paquet n'est admis à entrer dans la file de traitement.

Avantageusement, la file de traitement stockée dans la mémoire de liste d'attente occupe une zone d'adressage mobile fonction des arrivées et des départs d'identificateurs de paquets en son sein. Cette zone d'adressage mobile est constituée d'une plage d'adresses se succédant sans trou, dans l'ordre naturel d'un compteur générateur d'adresse à rebouclage. Elle est repérée à tout instant par ses deux limites extrêmes au moyen de deux pointeurs, l'un dit pointeur de lecture pointant sur l'identificateur de paquet le plus ancien de la file de traitement et l'autre dit pointeur d'écriture pointant sur l'identificateur de paquets le plus récent de la file de traitement, et maintenue à jour au moyen d'un pointeur auxiliaire de lecture remontant la file de traitement de manière à toujours pointer sur l'identificateur de paquets stocké dans la mémoire de liste d'attente à comparer avec l'identificateur de paquet stocké dans le banc de registres de travail, et d'un pointeur auxiliaire d'écriture remontant également la file de traitement mais de manière à toujours pointer sur l'adresse qui précède celle du dernier identificateur réinséré dans la file d'attente à la suite d'un test de comparaison et qui est prise comme adresse de réinsertion dans la file d'attente, de l'identificateur de paquet non retenu dans une comparaison en cours.

Avantageusement, le procédé de gestion d'une liste de paquets en attente de réémission dans un port de sortie d'un commutateur de paquets après avoir été reçus, mis temporairement dans une mémoire tampon par ledit commutateur de paquets et répertoriés à l'aide d'identificateurs donnant, de manière explicite ou implicite l'adresse de leur début d'enregistrement dans la mémoire tampon et leur niveau de priorité, comporte :
- une phase d'initialisation permettant d'atteindre un point de branchement et consistant à
   - inscrire dans une file de traitement stockée dans une mémoire de liste d'attente, à la suite, dès leur arrivée au port de sortie, les identificateurs des paquets devant être réémis, cette inscription se faisant sous le contrôle d'un pointeur d'inscription incrémenté selon un ordre d'adressage dit naturel, engendré par un compteur d'adresses opérant un balayage avec rebouclage, de la mémoire de liste d'attente, et
   - positionner un pointeur de lecture sur la mémoire de liste d'attente à l'adresse de l'identificateur de paquet le plus anciennement mémorisé dans la file de traitement,
- une deuxième phase de sélection du paquet en attente le plus prioritaire débutant après le point de branchement, et consistant à :
   - attendre que les pointeurs d'écriture et de lecture pointent des adresses différentes,
   - dès que les pointeurs d'écriture et de lecture pointent des adresses différentes, positionner un pointeur auxiliaire de lecture et un pointeur auxiliaire d'écriture au niveau du pointeur d'écriture, et entamer des cycles élémentaires successifs de comparaison deux à deux des niveaux de priorité des identificateurs de paquets, en remontant pas à pas la file de traitement avec rétention en fin de chaque cycle de l'identificateur de paquet le plus prioritaire, lesdits cycles débutant par une recopie l'identificateur de paquet contenu dans la mémoire de liste d'attente à l'adresse pointée par le pointeur auxiliaire de lecture, dans un banc de registres de travail extérieur à la mémoire de file d'attente et une décrémentation d'une unité du pointeur auxiliaire de lecture, la décrémentation s'entendant par rapport à l'ordre naturel d'adressage de la mémoire de file d'attente, et un cycle élémentaire consistant dans les opérations suivantes, se succédant l'une après l'autre :
      - un test de sortie de cycle consistant à comparer le pointeur auxiliaire de lecture au pointeur de lecture décrémenté d'une unité et prévoir une sortie de cycle s'il y a égalité, et un rebouclage en fin de cycle sur le début d'un nouveau cycle s'il n'y a pas égalité,
      - une comparaison du niveau de priorité contenu dans l'identificateur de paquet stocké dans le banc de travail avec le niveau de priorité contenu dans l'identificateur de paquet stocké dans la mémoire de liste d'attente à l'adresse pointée par le pointeur auxiliaire de lecture,
      - une inscription, dans la mémoire de file d'attente, à l'adresse pointée par le pointeur auxiliaire d'écriture, de l'identificateur de paquet non retenu à la suite de la comparaison,
      - uniquement si la comparaison de niveaux de priorité montre que le niveau de priorité du paquet dont l'identificateur est stocké dans la mémoire de file d'attente à l'adresse pointée par le pointeur auxiliaire de lecture est supérieur à celui du paquet dont l'identificateur est stocké dans le banc de travail, un transfert de l'identificateur stocké dans la mémoire de liste d'attente à l'adresse pointé par le pointeur auxiliaire de lecture, vers le banc de registres de travail et
      - une décrémentation d'une unité du pointeur auxiliaire d'écriture et du pointeur auxiliaire de lecture, ce qui constitue la fin d'un cycle,
à la sortie de cycle :
- une recopie du pointeur auxiliaire d'écriture dans le pointeur de lecture,
- une sélection du paquet dont le descripteur est stocké dans le banc de registres de travail pour réémission immédiate par le port de sortie, et
- un retour au point de branchement.

Avantageusement, la comparaison du niveau de priorité de deux paquets de la file de traitement est précédée d'un test d'identité conduisant, si les deux paquets se révèlent identiques, à éluder la comparaison de niveau de priorité et à décrémenter d'une unité le pointeur auxiliaire de lecture.

Avantageusement, lorsque les identificateurs de paquets renferment une information sur la date de réception des paquets par le commutateur de paquets, la comparaison du niveau de priorité de deux paquets de la file de traitement est précédée d'un test d'ancienneté de réception, par le commutateur de paquets, du paquet dont l'identificateur est stocké dans la mémoire de liste d'attente à l'adresse pointée par le pointeur auxiliaire de lecture conduisant, si le paquet se révèle trop ancien, à éluder la comparaison de niveau de priorité et à décrémenter d'une unité le pointeur auxiliaire de lecture.

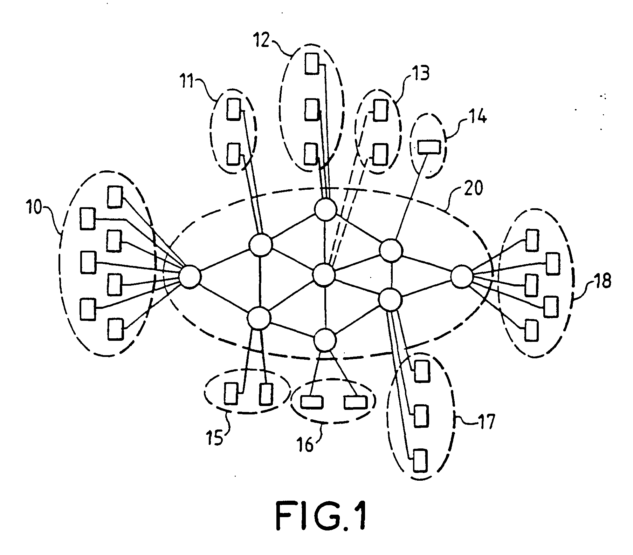

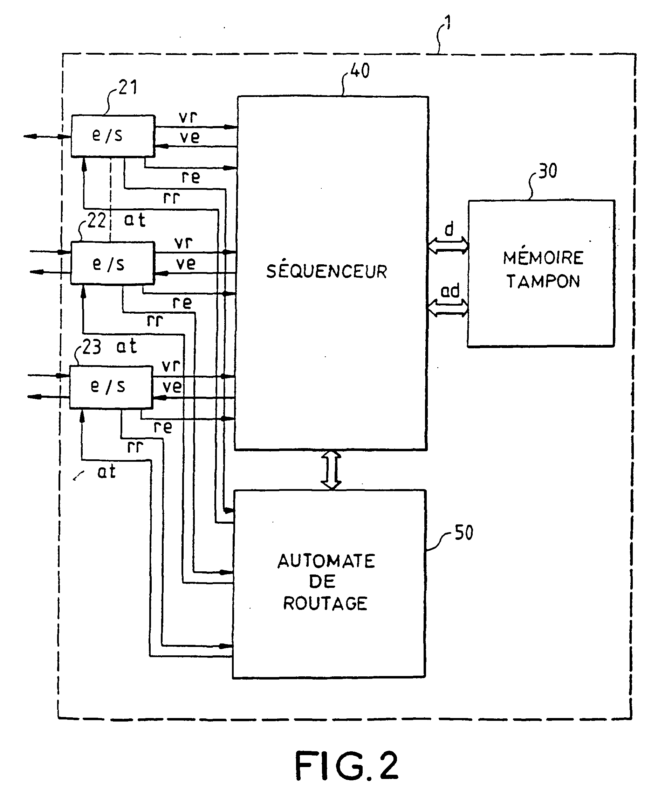

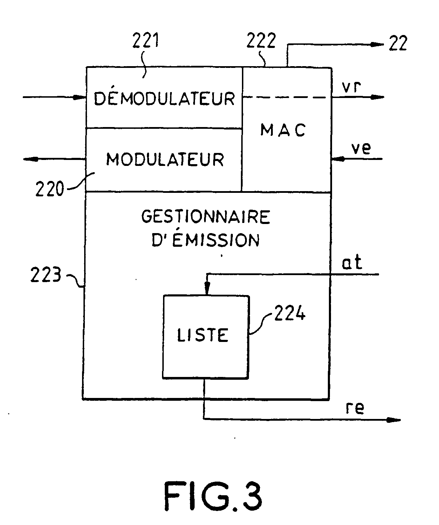

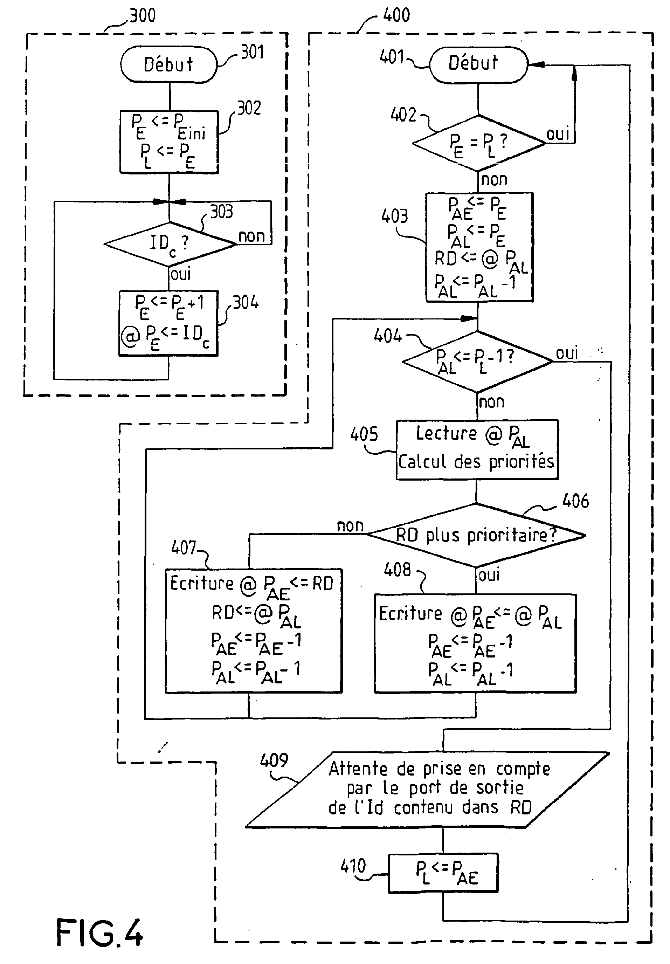

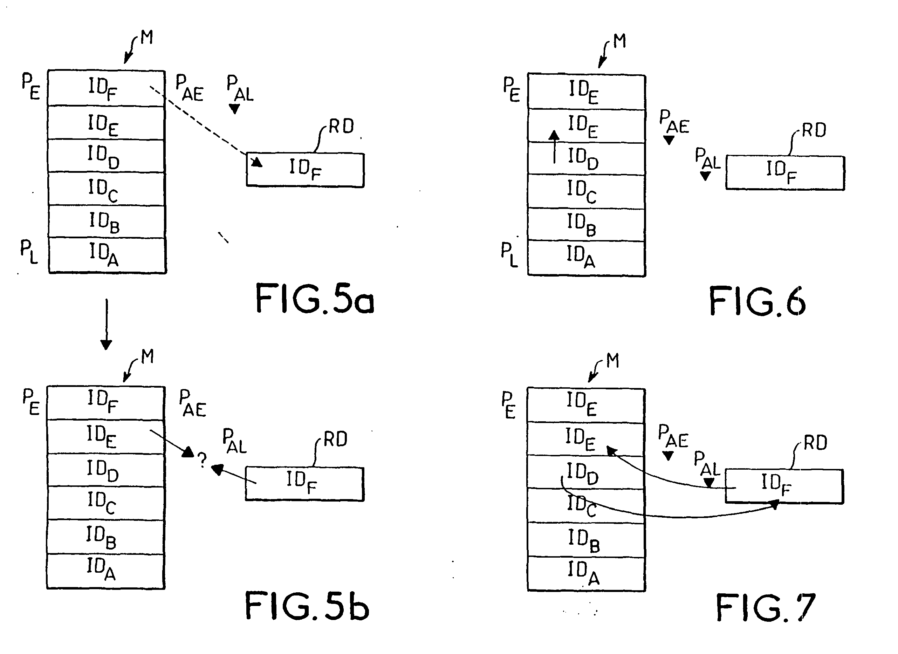

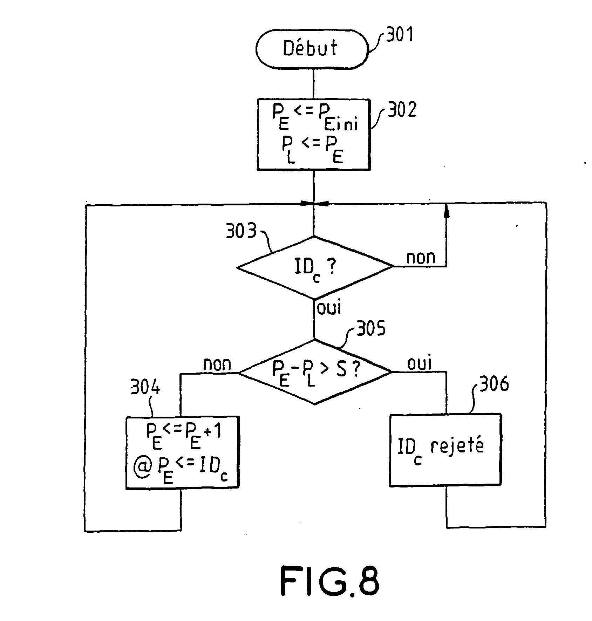

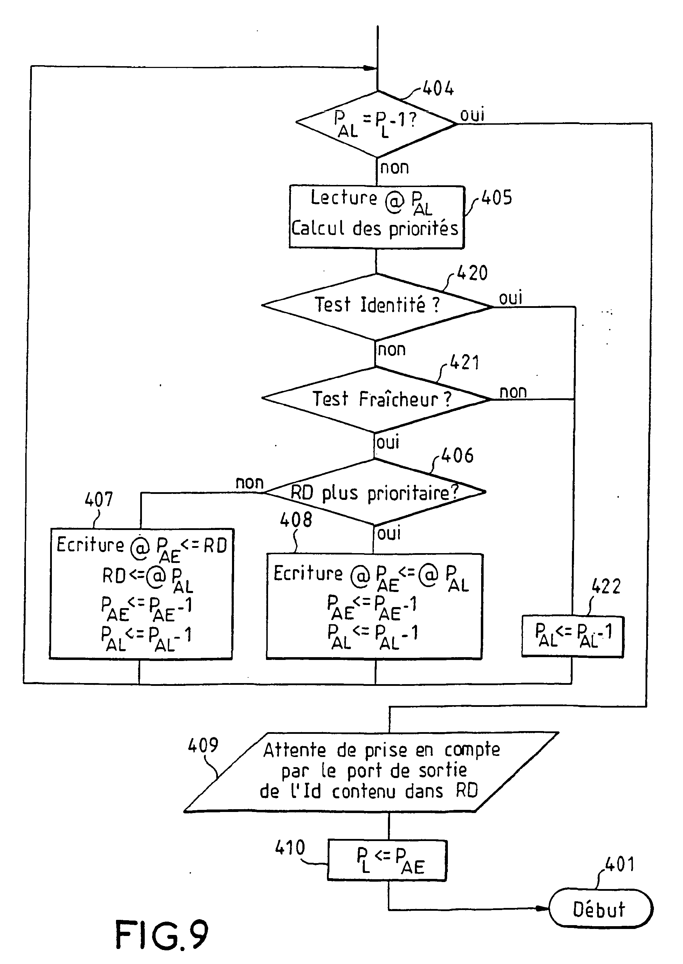

D'autres caractéristiques et avantages de l'invention ressortiront de la description ci-après d'un mode de réalisation donné à titre d'exemple. Cette description sera faite en regard du dessin dans lequel :
- une figure 1 représente un exemple de topologie de réseau de transmission par paquets,
- une figure 2 représente un exemple d'architecture de commutateur de paquets,
- une figure 3 détaille les parties principales d'un port d'entrée-sortie d'un commutateur de paquets,
- une figure 4 est un organigramme illustrant les principales étapes d'un procédé de gestion de liste d'attente d'un port de sortie de commutateur de paquets conforme à l'invention,
- des figures 5a et 5b illustrent des opérations de préparation d'un processus de recherche de l'élément de liste d'attente le plus ancien dans le niveau de priorité le plus élevé,
- des figures 6 et 7 illustrent des opérations de manipulation de registres mémoire intervenant au cours d'une opération de comparaison des niveaux de priorité de deux éléments de liste d'attente et de sélection de celui des deux considéré comme le plus ancien au niveau de priorité le plus élevé, et
- des figures 8 et 9 montrent des variantes de parties de l'organigramme montré à la figure 4.

La figure 1 montre différents ensembles d'équipements 10 à 18 communiquant entre eux par l'intermédiaire d'un réseau de transmission à commutation par paquets 20. Les ensembles d'équipements 10 à 18 sont d'importances inégales et géographiquement dispersés sur une zone couverte par le réseau de transmission à commutation par paquets 20. Le réseau de transmission à commutation par paquets 20 est schématisé par un maillage de noeuds d'interconnexion ou commutateurs de paquets représentés par des cercles, et de liaisons physiques de transmission repésentées par des segments de droites interconnectant les commutateurs de paquets entre eux. Chaque équipement représenté par un rectangle, est raccordé au réseau de transmission à commutation par paquets 20, au niveau d'un ou plusieurs commutateurs de paquets placés à proximité, par l'intermédiaire d'un terminal spécialisé non représenté et d'une ou plusieurs liaisons physiques de transmission.

Pour leur manipulation au sein d'un réseau de transmission par paquets, les messages échangés par les équipements subissent une double mise en forme : d'une part, une numérisation leur donnant l'aspect d'une suite de données binaires suivie d'un empaquetage de la suite de données binaires obtenue sous forme d'un ou plusieurs paquets successifs adaptés aux traitements de routage opérés au sein des commutateurs de paquets, et, d'autre part, une mise en forme des paquets en signaux de transmission électriques ou optiques pour leurs acheminements par les liaisons physiques d'interconnexion.

Les paquets sont constitués d'une suite de données binaires de message précédée d'une suite de données binaires de service renfermant des informations utiles à leur routage au sein des commutateurs de paquets traversés. Ils respectent un format d'organisation ou protocole particulier adapté aux caractéristiques des circuits logiques combinatoires et/ou séquentiels effectuant les routages au sein des commutateurs de paquets.

Les signaux électriques ou optiques utilisés pour acheminer les paquets sur les liaisons physiques de transmission d'interconnexion reliant les commutateurs de paquets entre eux et aux équipements, sont adaptés aux caractéristiques physiques des liaisons utilisées.

Aux extrémités des liaisons de transmission, que ce soit au niveau des terminaux raccordant les équipements au réseau ou au niveau des ports d'entrée-sortie des commutateurs de paquets, on trouve des circuits de démodulation et de modulation assurant la transformation d'un signal de transmission reçu par l'intermédiaire d'une liaison physique en son paquet correspondant et, inversement, la transformation d'un paquet manipulé au niveau d'un terminal d'équipement ou d'un commutateur de paquets en un signal de transmission adapté aux liaisons physiques de transmission.

Un paquet reçu et démodulé au niveau d'un port d'entrée-sortie d'un commutateur de paquets doit être aiguillé, au sein de ce commutateur de paquets, vers un ou plusieurs autres ports d'entrée-sortie pour être réémis sur une ou plusieurs autres liaisons physiques de transmission directement raccordées à ce commutateur de paquets en vue de le rapprocher de sa destination finale. Cette opération, dite de routage, est la tâche principale d'un commutateur de paquets. Elle peut nécessiter un certain délai fonction des encombrements des ports de sortie de réémission car plusieurs paquets peuvent être reçus simultanément par des ports d'entrée différents et devoir être aiguillés, pour leurs réémissions, sur un même port de sortie, ce qui peut provoquer un embouteillage au niveau du port de sortie imposant une mémorisation temporaire des trafics de données entrants et une gestion de file d'attente au niveau des ports de sortie pour éviter une perte de paquets.

La figure 2 illustre une architecture possible pour un commutateur de paquets 1. Celui-ci communique, par des ports d'entrée-sortie e/s 21, 22, 23 avec d'autres commutateurs de paquets ou avec des équipements raccordés à son réseau par l'intermédiaire des liaisons physiques de transmission mono ou bidirectionnelles. Sur la figure, trois ports d'entrée-sortie e/s 21, 22, 23 sont représentés mais leur nombre n'est pas limité. Il est adapté au nombre de raccordements prévus pour le commutateur de paquets considéré, un port d'entrée-sortie assurant l'interface avec une liaison physique de transmission bidirectionnelle ou avec deux liaisons physiques de transmission monodirectionnelles utilisées l'une à l'émission et l'autre à la réception.

Dans l'exemple représenté, le port d'entrée-sortie e/s 21 assure l'interface avec une liaison physique de transmission bidirectionnelle et les ports e/s d'entrée-sortie 22 et 23 l'interface avec deux liaisons physiques de transmission monodirectionnelles utilisées l'une à la réception et l'autre à l'émission. Assurer l'interface consiste à effectuer les tâches de modulation et de démodulation, et une tâche de gestion de liste de paquets en attente de réémission. La tâche de modulation consiste à mettre les paquets à réémettre sous la forme d'un signal de transmission aux caractéristiques physiques adaptées à celles de la liaison de transmission utilisée à l'émission aboutissant sur le port d'entrée-sortie concerné. La tâche de démodulation consiste à extraire les paquets contenus dans les signaux de transmission reçus sur la liaison physique de transmission utilisée à la réception et aboutissant au port d'entrée-sortie e/s concerné. La tâche de gestion de liste d'attente consiste à mettre en file, les uns derrière les autres les paquets à réémettre lorsqu'ils parviennent à une cadence trop rapide eu égard au débit de la liaison physique de transmission utilisée à l'émission.

Un port d'entrée-sortie e/s est relié aux circuits internes de traitement du commutateur de paquets qu'il équipe, par une voie de réception de données, une voie d'émission de données et plusieurs ports de contrôle. Par la voie de réception de données vr, il met à la disposition de son commutateur de paquets, le trafic entrant de données binaires parvenant au commutateur de paquets par la liaison physique de transmission qu'il contrôle. La voie d'émission de données ve lui permet de recevoir les paquets qu'il doit réémettre et qui proviennent d'autres circuits internes du commutateur de paquets. Les ports de contrôle dont un port de requête de routage rr, un port d'attribution de paquets at et un port de requête de paquets à émettre re servent aux gestions de la réception des paquets, de la réémission des paquets et de la file d'attente des paquets à réémettre.

Outre ses ports d'entrée-sortie e/s 21, 22, 23, le commutateur de paquets comporte un automate de routage 30, une mémoire tampon 40 utilisée pour stocker sur un certain délai les trafics de données entrants et un séquenceur 50 gérant l'adressage de la mémoire tampon 30 et les accès à cette dernière par les différents ports d'entrée-sortie e/s 21, 22, 23 et l'automate de routage 50.

L'automate de routage 50 est un circuit à logique combinatoire et/ou séquentielle, par exemple à microprocesseur, qui traite les requêtes de routage émises par les différents ports e/s d'entrée-sortie 21, 22, 23 pour en extraire les profils de routage associés à chaque paquet en cours de réception par le commutateur de paquets et engendrer, à partir de ce profil de routage, des consignes d'attribution de paquet à destination des ports e/s d'entrée-sortie devant les réémettre.

La mémoire tampon 30 est un rassemblement de mémoires circulantes dont les présences sont imposées par l'obligation de gérer des listes d'attente au niveau des ports e/s d'entrée-sortie pour la réémission des paquets et, dans une moindre mesure, par les temps de traitement des requêtes de routage. Chaque mémoire circulante est réservée à l'écriture à un trafic de données entrant déterminé donc à un port e/s d'entrée-sortie déterminé, mais peut être lue indifféremment par tous les ports e/s d'entrée-sortie.

La figure 3 détaille la constitution d'un port d'entrée-sortie, par exemple le port d'entrée-sortie 22. Celui-ci comporte un circuit modulateur 220, et un circuit démodulateur 221 associés à un circuit MAC 222, ainsi qu'un circuit gestionnaire d'émission 223 couplé à un circuit de gestion de liste d'attente 224

La gestion de file d'attente est faite, au niveau de chacun des ports de sortie du commutateur, non pas sur les paquets, mais sur des identificateurs de paquets qui font référence à chacun des paquets en attente de réémission temporairement mémorisé dans la mémoire tampon 30. Ces identificateurs de paquets rassemblent chacun, sous une forme explicite ou implicite, l'adresse de la mémoire circulante contenant le paquet référencé, au sein de cette mémoire circulante, l'adresse du début du paquet référencé et diverses autres informations utiles sur le paquet référencé dont souvent, sa date de réception par le commutateur de paquets si elle ne peut pas être déduite de son positionnement dans une mémoire circulante, et un niveau de consigne de priorité fonction de la voie virtuelle sur laquelle chemine le paquet.

Une voie virtuelle est le chemin emprunté par un paquet au travers du réseau pour parvenir de son entité émettrice aux différentes entités destinataires. Elle n'existe qu'au moment de l'acheminement du paquet et correspond aux aiguillages effectivement réalisés par les commutateurs de paquets lorsqu'ils sont traversés par le paquet considéré. Elle peut être invariable, c'est le cas des réseaux sécuritaires qui doivent répondre à des exigences sévères de garantie quant à l'acheminement effectif des messages et aux délais d'acheminement.

Les paquets sont en général émis à une cadence régulière sur une voie virtuelle mais la régularité avec laquelle ils se succèdent se dégrade au fur et à mesure de leur progression le long de la voie virtuelle en raison des conditions variables d'embouteillage qu'ils rencontrent dans les commutateurs de paquets traversés. Cette dégradation de la régularité de succession des paquets au cours de leur progression le long d'une voie virtuelle connue sous le nom de phénomène de gigue, s'accroît avec le nombre de commutateurs de paquets traversés. Comme un même commutateur de paquets n'est pas vu sous le même numéro d'ordre de succession par les voies virtuelles qui le traversent, les paquets qu'il traite sont affectés de gigues différentes, en fonction des voies virtuelles qu'ils empruntent. Selon la position du commutateur de paquets sur une voie virtuelle, la gigue prévisible peut être plus ou moins proche du maximum toléré.

En jouant sur les niveaux de priorité des paquets dans les listes d'attente de réémission des ports e/s d'entrée-sortie des commutateurs de paquets, il est possible d'agir sur la répartition des délais d'attente de réémission entre les voies virtuelles empruntant un même commutateur de paquets. Cela permet de favoriser le routage des paquets déjà affecté d'une gigue importante afin de leur éviter un dépassement des tolérances. Le niveau de priorité d'un paquet est alors établi en fonction du commutateur de paquets traversé et de la voie virtuelle empruntée qui mentionnée dans les bits de service du paquet. Il peut être tiré de tables de définition qui sont localisées dans les commutateurs de paquets et qui donnent sa valeur en fonction du commutateur de paquets et de la voie virtuelle concernés.

La gestion de file d'attente avec niveaux de priorité consiste à :
- placer les identificateurs des paquets en attente de réémission, en rang, à la suite les uns des autres et dans leur ordre d'arrivée au port de sortie concerné, dans une file de traitement stockée dans une mémoire de liste d'attente,
- à repérer, dans cette file de traitement mémorisée, l'identificateur correspondant au paquet le plus anciennement admis au niveau de priorité le plus élevé,
- à extraire de la file de traitement l'identificateur de paquet repéré,
- à présenter l'identificateur de paquet extrait de la file de traitement comme correspondant au paquet à faire réémettre en priorité par le port de sortie concerné, et
- à recommencer les opérations de repérage, d'extraction et de présentation à chaque fois que le port de sortie est disponible ou va l'être prochainement pour une réémission d'un nouveau paquet et tant que la file de traitement n'a pas été vidée.

Ces opérations sous-entendent un maintien à jour permanent de la file de traitement mémorisée, c'est-à-dire une prise en compte des introductions de nouveaux identificateurs de paquets chaque fois qu'il s'en présente pour réémission au port de sortie concerné, et des retraits des identificateurs de paquets dont l'opération de réémission a été entamée. Pour réaliser ce maintien à jour, la file de traitement est placée, dans la mémoire de liste d'attente, dans une zone d'adressage qui est à la fois de largeur variable et mobile en fonction des arrivées et départs d'identificateurs de paquet. Cette zone d'adressage mobile est constituée d'une plage d'adresses se succédant sans trou, dans l'ordre naturel d'adressage de la mémoire de liste d'attente, ordre naturel d'adressage correspondant à l'incrémentation d'un compteur et permettant un rebouclage de la mémoire par dépassement de capacité d'adressage. Elle est repérée à chaque instant par deux pointeurs, l'un dit pointeur d'écriture P_{E}, repérant sa limite supérieure, c'est-à-dire l'adresse de l'identificateur de paquet entré le plus récemment, et l'autre dit pointeur de lecture P_{L}, repérant sa limite inférieure, c'est-à-dire l'adresse de celui des identificateurs de paquets y figurant le plus anciennement. Le pointeur d'écriture P_{E} est incrémenté d'une unité à chaque introduction d'un nouvel identificateur de paquet dans la liste de traitement tandis que le pointeur de lecture P_{L} est incrémenté de façon unique ou multiple pour tenir compte des retraits d'identificateur de paquet, de la file de traitement.

Le repérage, dans la file de traitement mémorisée, de l'identificateur correspondant au paquet le plus anciennement admis au niveau de priorité le plus élevé se fait:
- en remontant pas à pas la file de traitement depuis l'identificateur de paquet le plus récemment admis, en direction de celui le plus anciennement admis,
- en procédant, à chaque pas à une comparaison de l'identificateur de paquet passé lu dans la file de traitement avec un identificateur de paquet retenu à la suite des comparaisons précédentes comme le plus ancien au niveau de priorité le plus élevé et stocké dans un banc auxiliaire de registres de mémoire dit banc de travail,
- en plaçant ou conservant dans le banc de registre de travail, l'identificateur de paquet se révélant en fin de chaque comparaison être le plus prioritaire ou le plus ancien dans la file de traitement pour un même niveau de priorité, et
- en réinsérant, en fin de chaque comparaison, l'identificateur de paquet non retenu, dans la file de travail, au rang précédent celui de l'identificateur de paquet lu dans la file de traitement.

Pour faciliter le déroulement de la suite de comparaisons aboutissant au repérage de l'identificateur de paquet de la file de traitement le plus ancien dans le niveau de priorité le plus élevé, on prévoit l'utilisation de deux pointeurs auxiliaires, l'un dit pointeur auxiliaire de lecture P_{AL} repérant l'adresse dans la file de traitement de l'identificateur de paquet lu directement dans la mémoire de liste d'attente lors d'une comparaison et l'autre, dit pointeur auxiliaire d'écriture P_{AE} repérant l'adresse de réinsertion dans la file de traitement de l'identificateur de paquet non retenu au cours d'une comparaison.

La figure 4 est un organigramme illustrant les différentes étapes d'un procédé de gestion de liste d'attente tenant compte des niveaux de priorité et mettant en oeuvre les quatre pointeurs précités. Ce procédé permet d'assumer simultanément deux tâches différentes, l'une assurant en permanence, l'introduction, dans la file de traitement, des identificateurs de paquets se présentant pour réémission et l'autre assurant la sélection et l'extraction de la file de traitement, de l'identificateur de paquet correspondant au paquet à réémettre en priorité à chaque fois que le port de sortie est disponible pour une réémission de paquet.

La première tâche d'introduction, dans la file de traitement, des identificateurs de paquet se présentant pour réémission par le port de sortie concerné, assure la gestion du pointeur d'écriture P_{E} qui consiste à l'incrémenter d'une unité à chaque fois qu'un identificateur de paquet ID_{C} se présente pour réémission et à inscrire cet identificateur de paquet ID_{C} dans la mémoire de liste d'attente, à la nouvelle adresse pointée par le pointeur d'écriture P_{E}. Son exécution fait l'objet de la partie 300 de l'organigramme visible sur la gauche de la figure 4.

A l'initialisation, c'est-à-dire après une mise en route du commutateur de paquets, repérée par un point de départ 301, les pointeurs d'écriture P_{E} et de lecture P_{L} sont mis, en 302, à une valeur quelconque de départ P_{Eini}. Ensuite, la tâche entre dans une boucle testant en 303 la présence ou l'absence d'un identificateur de paquet ID_{C} candidat à la liste d'attente. En l'absence d'un identificateur de paquet candidat ID_{C}, le rebouclage est direct. En présence d'un identificateur de paquet candidat ID_{C} deux opérations sont faites en 304 avant le rebouclage : une incrémentation d'une unité, du pointeur d'écriture P_{E} et une inscription de l'identificateur de paquet candidat ID_{C} dans la mémoire de liste d'attente à la nouvelle adresse pointée par le pointeur d'écriture P_{E}. Ainsi la file de traitement progresse constamment dans la mémoire de liste d'attente dans le sens des adresses croissantes, ce qui est sans importance car il y a rebouclage par débordement du compteur d'adresse.

La deuxième tâche de sélection et d'extraction de la file de traitement, de l'identificateur de paquet correspondant au paquet à réémettre en priorité à chaque fois que le port de sortie est disponible pour la réémission d'un paquet fait l'objet de la partie 400 de l'organigramme visible sur la droite de la figure 4.

Après une initialisation repérée par un point de départ 401, les pointeurs d'écriture P_{E} et de lecture P_{L} subissent en 402 un test d'égalité destiné à vérifier si la file de traitement n'est pas vide. Si la file de traitement est vide, il n'y a pas de paquet à réémettre ; la sélection et l'extraction d'un identificateur de paquet n'ont pas de sens. L'exécution de la deuxième tâche est arrêtée et reprise à son début. S'il n'y a pas égalité, la file de traitement n'est pas vide. On procède alors en 403, à l'initialisation des pointeurs auxiliaires d'écriture P_{AE} et de lecture P_{AL} sur la valeur du pointeur d'écriture P_{E}, au chargement d'un banc de registres de travail RD avec l'identificateur de paquet stocké dans la mémoire de liste d'attente à l'adresse pointée par le pointeur auxiliaire de lecture P_{AL} et à la décrémentation d'une unité du pointeur auxiliaire de lecture P_{AL}. Ainsi, on se retrouve avec un banc de travail RD contenant l'identificateur de paquet le plus récemment introduit dans la file de traitement et avec un pointeur auxiliaire de lecture P_{AL} pointant sur l'identificateur de paquet précédant le plus récent dans la file de traitement.

La deuxième tâche se poursuit par une boucle de recherche de l'identificateur de paquet de la file de traitement qui est le plus ancien dans le niveau de priorité le plus élevé.

Cette boucle commence en 404, par un test de fin de boucle portant sur l'appartenance du pointeur auxiliaire de lecture P_{AL} à la file de traitement. Comme ce pointeur auxiliaire de lecture P_{AL} subit une décrémentation régulière, il sort de la file de traitement dès qu'il atteint l'adresse précédant celle de l'identificateur de paquet le plus anciennement introduit et non encore extrait. L'identificateur de paquet le plus anciennement introduit dans la file de traitement sans en avoir été extrait étant pointé par le pointeur de lecture P_{L}, l'adresse précédente est obtenue en décrémentant le pointeur de lecture P_{L} d'une unité. Le test de sortie de file de traitement consiste en une simple vérification de l'égalité du pointeur auxiliaire de lecture P_{AL} avec la valeur du pointeur de lecture P_{L} décrémentée d'une unité. En cas d'inégalité le traitement de la boucle se poursuit tandis qu'en cas d'égalité il y a sortie de boucle.

En cas d'inégalité, le traitement de boucle se poursuit en 405, par la lecture de l'identificateur de paquet pointé par le pointeur auxiliaire de lecture P_{AL} puis par une comparaison en 406 des niveaux de priorité de l'identificateur de paquet stocké dans le banc de travail RD et de l'identificateur de paquet pointé dans la mémoire de liste d'attente par le pointeur auxiliaire de lecture P_{AL}. Selon le résultat de la comparaison, c'est soit l'identificateur de paquet stocké dans le banc de travail, soit l'identificateur de paquet lu dans la mémoire de liste d'attente à l'adresse pointée par le pointeur auxiliaire de lecture P_{AL}, qui a le plus grand niveau de priorité ou la plus grande ancienneté dans la file de travail à niveau de priorité identique.

Lorsque c'est l'identificateur de paquet lu dans la mémoire de liste d'attente qui a le plus grand niveau de priorité ou la plus grande ancienneté dans la file de travail à niveau de priorité identique, le traitement se poursuit en 407, avant un rebouclage en amont du test de fin de boucle 404, par une recopie de l'identificateur de paquet stocké dans le banc de travail RD, dans la mémoire de liste d'attente à l'adresse pointée par le pointeur auxiliaire d'écriture P_{AE}, puis par le chargement du banc de travail RD avec l'identificateur de paquet lu dans la mémoire de liste d'attente à l'adresse pointée par le pointeur auxiliaire de lecture P_{AL} et par les décrémentations d'une unité des pointeurs auxiliaires d'écriture P_{AE} et de lecture P_{AL}.

Lorsque c'est l'identificateur de paquet stocké dans le banc de travail RD qui a le plus grand niveau de priorité ou la plus grande ancienneté dans la file de travail à niveau de priorité identique, le traitement se poursuit en 408, avant un rebouclage en amont du test de fin de boucle 404, par une recopie, dans la mémoire de liste d'attente, de l'identificateur de paquet lu à l'adresse pointée par le pointeur auxiliaire de lecture P_{AL}, à l'adresse pointée par le pointeur auxiliaire d'écriture P_{AE} et par les décrémentations d'une unité des pointeurs auxiliaires d'écriture P_{AE} et de lecture P_{AL}.

La boucle de recherche de l'identificateur de paquet de la file de traitement qui est le plus ancien dans le niveau de priorité le plus élevé permet de progresser pas à pas dans la file de traitement en suivant un ordre croissant d'ancienneté d'introduction, en plaçant tout au long des comparaisons successives, l'identificateur de paquet jugé le plus prioritaire dans le banc de travail et en reconstituant, à la fin de chaque comparaison, la file de travail sans cet identificateur de paquet.

En cas d'un résultat positif du test de sortie de boucle pratiqué en 404, on procède en 409, à une opération de sortie consistant à attendre une prise en compte par le port de sortie de l'identificateur de paquet considéré comme le plus prioritaire, qui est stocké dans le banc de travail, puis en 410, à une opération de mise à jour de la limite la plus ancienne de la file d'attente pointée par le pointeur de lecture P_{L}, cette mise à jour consistant à donner au pointeur de lecture P_{L} la valeur du pointeur auxiliaire d'écriture P_{AE}. Après ces opérations, on retourne au début 401 pour rechercher le prochain identificateur de paquet stocké dans la file de traitement et devenu le plus prioritaire.

Les figures 5a et 5b illustrent les opérations de préparation des cycles de comparaison mentionnées en 403 dans la figure 4.

Dans la figure 5a, la file de traitement stockée dans la mémoire de liste d'attente M est supposée contenir six identificateurs de paquets ID_{A} à ID_{F} admis dans l'ordre alphabétique. Le plus anciennement admis ID_{A} a son adresse pointée par le pointeur de lecture P_{L} tandis que le plus récemment admis ID_{F} a son adresse pointée par le pointeur d'écriture P_{E}. Les pointeurs auxiliaires de lecture P_{AL} et d'écriture P_{AE} sont initialisés à la valeur du pointeur d'écriture P_{E}. Le banc de travail est chargé avec l'identificateur de paquet ID_{F} pointé dans la file de traitement par le pointeur auxiliaire de lecture P_{AL}.

Dans la figure 5b, le pointeur auxiliaire de lecture P_{AL} est décrémenté d'une unité et pointe, dans la file de traitement, le prochain l'identificateur de paquet ID_{E} qui va être comparé avec celui ID_{F} stocké dans le banc de travail RD.

Comme indiqué précédemment, la comparaison porte sur les niveaux de priorité des paquets à leurs passages dans le commutateur de paquets. Ces niveaux de priorité sont déduits des informations contenues dans les identificateurs de paquets, comme la voie virtuelle suivie, et de consignes locales comme les priorités accordées aux voies virtuelles au niveau du commutateur de paquets considéré.

Dans la figure 6, on a supposé que la comparaison entre les identificateurs de paquets ID_{F} et ID_{E} s'était terminée à l'avantage de l'identificateur de paquet ID_{F} stocké dans le banc de travail RD ce qui se manifeste par la présence de l'identificateur de paquet ID_{E} à la fois dans sa case de la file de traitement et dans celle de l'identificateur de paquet ID_{F}. On a également supposé que la comparaison suivante est entamée, les pointeurs auxiliaires de lecture P_{AL} et P_{AE} ayant été décrémentés d'une unité, et que cette comparaison va encore se terminer à l'avantage de l'identificateur de paquet ID_{F} stocké dans le banc de travail RD, c'est-à-dire que l'on passe par la branche d'un cycle de comparaison repérée en 408 sur la figure 4. L'identificateur de paquet ID_{F} est maintenu dans le banc de travail RD tandis que l'identificateur de paquet ID_{D}, qui n'a pas été retenu, est inscrit dans la file de traitement à l'adresse pointée par le pointeur auxiliaire d'écriture P_{AE}.

Dans la figure 7, on a fait les mêmes hypothèses que dans la figure 6, à l'exception du résultat de la comparaison entamée que l'on suppose à l'avantage de l'identificateur de paquet ID_{D} lu dans la file de traitement, ce qui revient à admettre que l'on passe par la branche d'un cycle de comparaison repérée en 407 sur la figure 4. L'identificateur de paquet ID_{F} non retenu est inscrit dans la file de traitement à l'adresse pointée par le pointeur auxiliaire d'écriture P_{AE} tandis que l'identificateur de paquet retenu ID_{D}, qui est pointé par le pointeur auxiliaire de lecture P_{AL}, est inscrit dans le banc de travail RD. On remarque, qu'à la suite de ces manipulations, l'identificateur de paquet ID_{F} a progressé d'un rang dans la file de traitement au détriment de l'identificateur de paquet ID_{E} qui le précédait mais qui avait été jugé moins prioritaire à la comparaison précédente.

Le procédé de gestion de liste d'attente qui vient d'être décrit relativement à l'organigramme de la figure 4 se prête facilement à l'introduction de mesures de sécurisation de la transmission des paquets basées sur la recherche de l'efficacité de fonctionnement au niveau des commutateurs de paquets.

Une première de ces mesures consiste à prévenir la saturation d'une liste d'attente en empêchant sa population de dépasser un certain seuil par refus d'admission de tout paquet au-delà de ce seuil. En effet, une telle saturation entraîne des délais anormaux de routage au sein du commutateur de paquets qui se propagent vers l'aval du réseau entraînant le risque d'autres saturations de listes d'attente dans d'autres commutateurs de paquets.

Les paquets refusés pour cause de dépassement de la capacité admissible d'une liste d'attente, ne sont pas réémis par le port de sortie concerné. Ils sont perdus pour la voie virtuelle ou la partie de voie virtuelle empruntant ce port de sortie mais leur perte ne concerne que ce port de sortie. Ils continuent à être transmis par le commutateur de paquets dans la mesure où ils sont également aiguillés vers d'autres ports de sortie. Le refus de réémission de paquets par un port de sortie de commutateur de paquets constitue un fonctionnement dégradé mais sain qui cesse dès que la situation de saturation cesse.

Dans le cas de paquets de longueurs variables, le critère de maximum de population dans la liste d'attente peut être affiné et remplacé par un critère basé sur une estimation du temps nécessaire au port de sortie pour la réémission des paquets repertoriés dans la liste d'attente, estimation qui est facile à faire lorsque l'on connaît la longueur de chaque paquet.

La figure 8 reprend la partie 300 de l'organigramme de la figure 4, consacrée à l'introduction, dans la file de traitement, des identificateurs des paquets candidats à la réémission, en y introduisant une procédure de limitation de la population de la file de traitement. Sur cette figure 8, on voit qu'un test de saturation 305 s'intercale à la suite du test 303 de présence d'identificateur de paquet ID_{C} candidat à la réémission, sur la branche correspondant à un résultat positif de celui-ci. Le test de saturation 305 consiste à retrancher de la valeur du pointeur d'écriture P_{E} celle du pointeur de lecture P_{L} et à comparer le résultat à un seuil S. Si le résultat est supérieur au seuil, l'identificateur de paquet ID_{C} candidat est rejeté (opération 306). Si le résultat est négatif, l'identificateur de paquet ID_{C} est admis et inscrit dans la file de traitement après que le pointeur d'écriture P_{E} ait été incrémenté d'une unité (opérations 304). Comme indiqué précédemment, le critère utilisé pour le test de saturation 305 peut être remplacer par d'autres critères représentatifs de la durée de réémission de l'ensemble des paquets répertoriés dans la file de traitement.

Une deuxième mesure améliorant l'efficacité de fonctionnement d'un commutateur de paquets consiste à chercher à éviter les réémissions de doublons en vérifiant avant d'entamer une comparaison de niveaux de priorité, que les deux identificateurs de paquet soumis à la comparaison ne sont pas identiques.

Une troisième mesure consiste à vérifier que les identificateurs de paquet soumis à la comparaison de niveaux de priorité correspondent bien à des paquets reçus suffisamment récemment pour être encore dans la mémoire tampon du commutateur de paquets. Cette vérification est basée sur la date de réception des paquets par le commutateur concerné qui figure expressément dans les identificateurs de paquets, soit de manière explicite, soit de manière implicite du fait que l'adressage à l'inscription de la mémoire tampon d'un commutateur de paquets est volontairement lié à la date.

La figure 9 reprend, dans la partie 400 de l'organigramme de la figure 4, la boucle consacrée à la recherche de l'identificateur de paquet de la file de traitement qui est le plus ancien dans le niveau de priorité le plus élevé. Un test d'identité 420 et un test de fraîcheur 421 sont intercalés entre la lecture en 405, dans la file de traitement, du deuxième identificateur de paquet soumis à la comparaison et le test de niveau de priorité 406.

Lorsque le test d'identité 420 est positif, la comparaison de niveaux de priorité envisagée est abandonnée pour entamer la comparaison suivante, ce qui se traduit par une décrémentation d'une unité, du pointeur auxiliaire de lecture P_{AL} en 422 suivie d'un rebouclage en amont du test de fin de boucle 404. Lorsqu'il est négatif, il est suivi par le test de fraîcheur 421.

Lorsque le test de fraîcheur 421 est négatif, c'est-à-dire lorsque l'on est en présence d'un paquet reçu par le commutateur de paquet depuis un temps anormalement long, la comparaison de niveaux de priorité envisagée est abandonnée pour entamer la comparaison suivante. Cet abandon se traduit, comme dans le cas d'un test d'identité 420 positif, par une décrémentation d'une unité, du pointeur auxiliaire de lecture P_{AL} en 422 suivie d'un rebouclage en amont du test de fin de boucle 404. Lorsque le test de fraîcheur est positif, il conduit à la poursuite de la comparaison de niveaux de priorité envisagée.

On remarque que les possibilités d'un test d'identité 420 positif ou d'un test de fraîcheur négatif entraîne une possibilité de décrochement du pointeur auxiliaire d'écriture P_{AE} par rapport au pointeur auxiliaire de lecture P_{AL}.

## Revendications

1. Procédé de gestion d'une liste de paquets en attente de réémission dans un port de sortie (21, 22, 23) d'un commutateur de paquets (1) après avoir été reçus, mis temporairement dans une mémoire tampon (30) par ledit commutateur de paquets (1) et répertoriés à l'aide d'identificateurs donnant, de manière explicite ou implicite l'adresse de leur début d'enregistrement dans la mémoire tampon et leur niveau de priorité, ledit procédé étant **caractérisé en ce qu'**il consiste à simultanément effectuer les tâches suivantes :
- première tâche :
- mettre les identificateurs de paquets en attente d'émission par le port de sortie à la suite les uns des autres et dans l'ordre de leurs arrivées au port de sortie, dans une file de traitement stockée dans une mémoire de liste d'attente,
- seconde tâche :
1-initialiser un banc de registres de travail, référencé ci dessous sous l'appellation RD, avec l'identificateur du paquet le plus récemment admis dans la file de traitement,
2- effectuer la boucle de recherche suivante (étapes 2.1 à 2.4) tant que le début de la file de traitement n'a pas été atteint :
2.1- sélectionner dans la file de traitement l'identificateur de paquet précédent immédiatement celui sélectionné au cours de la boucle précédente,
2.2- comparer la priorité dudit identificateur de paquet lu dans la file de traitement avec celle de l'identificateur de paquet contenu dans RD,
2.3- si la priorité dudit identificateur de paquet lu dans la file de traitement est supérieure ou égale à celle de l'identificateur de paquet contenu dans RD, écrire l'identificateur de paquet stocké dans RD dans la file d'attente immédiatement avant ledit identificateur de paquet lu et charger dans RD ledit identificateur de paquet lu,
2.4- si la priorité dudit identificateur de paquet lu dans la file de traitement est strictement inférieure à celle de l'identificateur de paquet contenu dans RD, écrire ledit identificateur de paquet lu dans la file de traitement immédiatement avant lui-même,
3- présenter l'identificateur de paquet stocké dans RD comme correspondant au paquet à faire réemettre en priorité par le port de sortie concerné,
4- attendre la prise en compte, par le port de sortie, de l'identifiant de paquet contenu dans RD,
5- recommencer les étapes 1 à 4 de la seconde tâche tant que la file de traitement n'est pas vide.

2. Procédé selon la revendication 1, **caractérisé en ce que** la comparaison du niveau de priorité de deux identificateurs de paquets sélectionnés dans la file de traitement est précédée d'un test d'identité conduisant, si les deux identificateurs de paquets se révèlent identiques, à éluder la comparaison de niveau de priorité et résoudre le doublon ainsi détecté en supprimant l'identificateur de paquet déjà présent dans le banc de registres de travail de la file de traitement stockée dans la mémoire de liste d'attente (224).

3. Procédé selon la revendication 1, **caractérisé en ce que**, lorsque les identificateurs de paquets renferment une information sur la date de réception des paquets par le commutateur de paquets, la comparaison du niveau de priorité de deux identificateurs de paquets sélectionnés dans la file de traitement est précédée d'un test d'ancienneté de réception, par le commutateur de paquets (1), du paquet dont l'identificateur est lu dans la file de traitement conduisant, si le paquet se révèle trop ancien, à éluder la comparaison de niveau de priorité et à l'exclure de la file de traitement stockée dans la mémoire de liste d'attente (224).

4. Procédé selon la revendication 1, **caractérisé en ce que** la population de la file de traitement stockée dans la mémoire de liste d'attente (224) est recensée en temps réel et comparée à un seuil maximum au delà duquel aucun nouveau paquet n'est admis à entrer dans la file de traitement.

5. Procédé selon la revendication 1, **caractérisé en ce que** la file de traitement stockée dans la mémoire de liste d'attente (224) occupe une zone d'adressage mobile fonction des arrivées et des départs d'identificateurs de paquets en son sein.

6. Procédé selon la revendication 5, **caractérisé en ce que** la zone d'adressage mobile est constituée d'une plage d'adresses se succédant sans trou, dans l'ordre naturel d'un compteur générateur d'adresse à rebouclage.

7. Procédé selon la revendication 6, **caractérisé en ce que** la zone d'adressage mobile est repérée à tout instant par ses deux limites extrêmes au moyen de deux pointeurs, l'un dit pointeur de lecture (P_{L}) pointant sur l'identificateur de paquet le plus ancien de la file de traitement et l'autre dit pointeur d'écriture (P_{E}) pointant sur l'identificateur de paquets le plus récent de la file de traitement.

8. Procédé selon la revendication 7, **caractérisé en ce que** les comparaisons deux à deux des identificateurs présents dans la file de traitement, en remontant la file de traitement, se font au moyen d'un pointeur auxiliaire de lecture (P_{AL}) remontant la file de traitement de manière à toujours pointer sur l'identificateur de paquets stocké dans la mémoire de liste d'attente à comparer avec l'identificateur de paquet stocké dans le banc de registres de travail (RD), et d'un pointeur auxiliaire d'écriture (P_{AE}) remontant également la file de traitement mais de manière à toujours pointer sur l'adresse qui précède celle du dernier identificateur réinséré dans la file de traitement à la suite d'une comparaison et qui est prise comme adresse de réinsertion dans la file de traitement, de l'identificateur de paquet non retenu dans une comparaison en cours.

9. Procédé selon la revendication 1, **caractérisé en ce qu'**il comporte :
- une phase d'initialisation permettant d'atteindre un point de branchement et consistant à
- inscrire dans une file de traitement stockée dans une mémoire de liste d'attente (224), à la suite, dès leur arrivée au port de sortie (21, 22, 23), les identificateurs des paquets devant être réémis, cette inscription se faisant sous le contrôle d'un pointeur d'inscription (P_{E}) incrémenté selon un ordre d'adressage dit naturel, engendré par un compteur d'adresses opérant un balayage avec rebouclage, de la mémoire de liste d'attente (224), et
- positionner un pointeur de lecture (P_{L}) sur la mémoire de liste d'attente (224) à l'adresse de l'identificateur de paquet le plus anciennement mémorisé dans la file de traitement,
- une deuxième phase de sélection du paquet en attente le plus prioritaire débutant après le point de branchement, et consistant à :
- attendre que les pointeurs d'écriture (P_{E}) et de lecture (P_{L}) pointent des adresses différentes,
- dès que les pointeurs d'écriture (P_{E}) et de lecture (P_{L}) pointent des adresses différentes, positionner un pointeur auxiliaire de lecture (P_{AL}) et un pointeur auxiliaire d'écriture (P_{AE}) au niveau du pointeur d'écriture (P_{E}), et entamer des cycles élémentaires successifs de comparaison deux à deux des niveaux de priorité des identificateurs de paquets en remontant pas à pas la file de traitement, avec rétention, en fin de chaque cycle, de l'identificateur de paquet le plus prioritaire, lesdits cycles débutant par une recopie l'identificateur de paquet contenu dans la mémoire de liste d'attente (224) à l'adresse pointée par le pointeur auxiliaire de lecture (P_{AL}), dans un banc de registres de travail (RD) extérieur à la mémoire de file d'attente (224) et une décrémentation d'une unité du pointeur auxiliaire de lecture (P_{AL}), la décrémentation s'entendant par rapport à l'ordre naturel d'adressage de la mémoire de file d'attente (224), et un cycle élémentaire consistant dans les opérations suivantes, se succédant l'une après l'autre :
- un test de sortie de cycle consistant à comparer le pointeur auxiliaire de lecture (P_{AL}) au pointeur de lecture (P_{L}) décrémenté d'une unité et prévoir une sortie de cycle s'il y a égalité, et un rebouclage en fin de cycle sur un nouveau début de cycle s'il n'y a pas égalité,
- une comparaison du niveau de priorité contenu dans l'identificateur de paquet stocké dans le banc de travail (RD) avec le niveau de priorité contenu dans l'identificateur de paquet stocké dans la mémoire de liste d'attente (224) à l'adresse pointée par le pointeur auxiliaire de lecture (P_{AL}),
- une inscription, dans la mémoire de file d'attente (224), à l'adresse pointée par le pointeur auxiliaire d'écriture (P_{AE}), de l'identificateur de paquet non retenu à la suite de la comparaison,
- uniquement si la comparaison de niveaux de priorité montre que le niveau de priorité du paquet dont l'identificateur est stocké dans la mémoire de file d'attente (224) à l'adresse pointée par le pointeur auxiliaire de lecture (P_{AL}) est supérieur à celui du paquet dont l'identificateur est stocké dans le banc de travail (RD), un transfert de l'identificateur stocké dans la mémoire de liste d'attente (224) à l'adresse pointé par le pointeur auxiliaire de lecture (P_{AL}), vers le banc de registres de travail (RD) et
- une décrémentation d'une unité du pointeur auxiliaire d'écriture (P_{AE}) et du pointeur auxiliaire de lecture (P_{AL}), ce qui constitue la fin d'un cycle,
à la sortie de cycle :
- une recopie du pointeur auxiliaire d'écriture (P_{AE}) dans le pointeur de lecture (P_{L}),
- une sélection du paquet dont le descripteur est stocké dans le banc de registres de travail (RD) pour réémission immédiate par le port de sortie (21, 22, 23), et
- un retour au point de branchement.

10. Procédé selon la revendication 9, **caractérisé en ce que** un cycle de comparaison du niveau de priorité de deux paquets de la file de traitement débute par un test d'identité conduisant, si les deux paquets se révèlent identiques, à éluder la comparaison de niveau de priorité et à décrémenter d'une unité le pointeur auxiliaire de lecture (P_{AL}).

11. Procédé selon la revendication 9, **caractérisé en ce que**, lorsque les identificateurs de paquets renferment une information sur la date de réception des paquets par le commutateur de paquets (1), un cycle de comparaison du niveau de priorité de deux paquets de la file de traitement débute par un test d'ancienneté de réception, par le commutateur de paquets (1), du paquet dont l'identificateur est stocké dans la mémoire de liste d'attente (224) à l'adresse pointée par le pointeur auxiliaire de lecture (P_{AL}) conduisant, si le paquet se révèle trop ancien, à éluder la comparaison de niveau de priorité et à décrémenter d'une unité le pointeur auxiliaire de lecture (P_{AL}).

## Claims

1. Method of managing a list of packets queued for retransmission in a packet switch (1) output port (21, 22, 23), after being received, placed temporarily in a buffer memory (30) by the said packet switch (1) and listed using identifiers implicitly or explicitly giving their start-of-record address in the buffer memory and their level of priority, the said method being **characterized in that** it consists in performing the following task simultaneously:
- first task:
- place the identifiers of packets queued for transmission by the output port one after the other in the order of their arrival at the output port, into a processing queue stored in a waiting list memory,
- second task:
1 - initializing a bank of work registers, referenced hereinbelow under the label RD, with the identifier of the packet most recently admitted into the processing queue,
2 - performing the following search loop (steps 2.1 to 2.4) so long as the start of the processing queue has not been reached:
2.1 - selecting from the processing queue the packet identifier immediately preceding the one selected in the course of the previous loop,
2.2 - comparing the priority of the said packet identifier read from the processing queue with that of the packet identifier contained in RD,
2.3 - if the priority of the said packet identifier read from the processing queue is greater than or equal to that of the packet identifier contained in RD, writing the packet identifier stored in RD to the queue immediately before the said packet identifier read and loading the said packet identifier read into RD,
2.4 - if the priority of the said packet identifier read from the processing queue is strictly less than that of the packet identifier contained in RD, writing the said packet identifier read to the processing queue immediately before itself,
3 - presenting the packet identifier stored in RD as corresponding to the packet to be resent by priority by the output port concerned,
4 - waiting for the treatment, by the output port, of the packet identifier contained in RD,
5 - recommencing steps 1 to 4 of the second task as long as the processing queue is not empty.

2. Method according to Claim 1, **characterized in that** the comparison of the priority level of two selected packet identifiers in the processing queue is preceded by an identity test leading, if the two packet identifiers prove identical, to bypassing the priority level comparison and resolving the duplicate thus detected by deleting the packet identifier already present in the bank of work registers of the processing queue stored in the queue list memory (224).

3. Method according to Claim 1, **characterized in that**, when the packet identifiers contain information on the date of reception of the packets by the packet switch, the comparison of the priority level of two packet identifiers selected in the processing queue is preceded by a test of seniority of reception, by the packet switch (1), of the packet whose identifier is read in the processing queue leading, if the packet proves too old, to bypassing the priority level comparison and to excluding it from the processing queue stored in the queue list memory (224).

4. Method according to Claim 1, **characterized in that** the population of the processing queue stored in the queue list memory (224) is enumerated in real time and compared to a maximum threshold beyond which no new packet is allowed to enter the processing queue.

5. Method according to Claim 1, **characterized in that**, the processing queue stored in the queue list memory (224) occupies an addressing area that is mobile according to the arrivals and departures of packet identifiers within it.

6. Method according to Claim 5, **characterized in that** the mobile addressing area consists of a range of addresses succeeding one another without a gap, in the natural order of a looped address generator counter.

7. Method according to Claim 6, **characterized in that** the mobile addressing area is identified at any instant by its two end boundaries by means of two pointers, one called a read pointer (P_{R}) pointing to the oldest packet identifier in the processing queue and the other called the write pointer (P_{W}) pointing to the most recent packet identifier in the processing queue.

8. Method according to Claim 7, **characterized in that** the two-by-two comparisons of the identifiers present in the processing queue, going back through the processing queue, are carried out by means of an auxiliary read pointer (P_{AR}) going back through the processing queue so as to always point to the packet identifier stored in the queue list memory to compare with the packet identifier stored in the bank of work registers (RD), and an auxiliary write pointer (P_{AW}) also going back through the processing queue but so as to always point to the address preceding that of the last identifier reinserted in the processing queue following a comparison test, which is taken as the address for reinserting the packet identifier not retained in a comparison in progress into the processing queue.

9. Method according to Claim 1, **characterized in that** it includes:
- an initialization phase for attaining a branch point and consisting in
- entering the identifiers of the packets that have to be retransmitted in a processing queue stored in a queue list memory (224), at the end, as soon as they arrive at the output port (21, 22, 23), this entry being done under the control of an entry pointer (P_{E}) incremented according to a 'natural' addressing order, generated by an address counter scanning the queue list memory (224) and looping back, and
- setting a read pointer (P_{R}) in the queue list memory (224) to the address of the earliest stored packet identifier in the processing queue,
- a second phase of selecting the highest priority queued packet starting after the branch point, consisting in:
- waiting for the write (P_{W}) and read (P_{R}) pointers to point to different addresses,
- as soon as the write (P_{W}) and read (P_{R}) pointers point to different addresses, setting an auxiliary read pointer (P_{AR}) and an auxiliary write pointer (P_{AW}) at the level of the write pointer (P_{W}), and initiating successive elementary two-by-two comparison cycles of the priority levels of the packet identifiers, by going back step by step along the processing queue retaining the highest priority packet identifier at the end of each cycle, the said cycles starting by copying the packet identifier contained in the queue list memory (224) at the address pointed to by the auxiliary read pointer (P_{AR}), into a bank of work registers (RD) external to the queue memory (224) and decrementing the auxiliary read pointer (P_{AR}) by one unit, the decrementation being understood to be in relation to the natural addressing order of the queue memory (224), and an elementary cycle consisting of the following operations, one after another:
- a cycle exit test consisting in comparing the auxiliary read pointer (P_{AR}) with the read pointer (P_{R}) decremented by one unit and providing a cycle exit if there is equality, and a loopback at the end of the cycle to the start of a new cycle if there is no equality,
- a comparison of the priority level contained in the packet identifier stored in the working bank (RD) with the priority level contained in the packet identifier stored in the queue list memory (224) at the address pointed to by the auxiliary read pointer (P_{AR}),
- entry in the queue memory (224), at the address pointed to by the auxiliary write pointer (P_{AW}), of the packet identifier not retained after the comparison,
- only if the comparison of the priority levels shows that the priority level of the packet whose identifier is stored in the queue memory (224) at the address pointed to by the auxiliary read pointer (P_{AR}) is higher than that of the packet whose identifier is stored in the working bank (RD), a transfer of the identifier stored in the queue list memory (224) at the address pointed to by the auxiliary read pointer (P_{AR}), to the bank of work registers (RD) and
- a decrementation by one unit of the auxiliary write pointer (P_{AW}) and of the auxiliary read pointer (P_{AR}) which constitutes the end of a cycle,
at the cycle exit:
- copying of the auxiliary write pointer (P_{AW}) into the read pointer (P_{R}),
- selection of the packet whose descriptor is stored in the bank of work registers (RD) for immediate retransmission by the output port (21, 22, 23), and
- a return to the branch point.

10. Method according to Claim 9, **characterized in that** a comparison cycle of the priority level of two packets in the processing queue begins with an identity test leading, if both packets prove identical, to bypassing the priority level comparison and decrementing the auxiliary read pointer (P_{AR}) by one unit.

11. Method according to Claim 9, **characterized in that**, when the packet identifiers contain information on the date of reception of the packets by the packet switch (1), a comparison cycle of the priority level of two packets in the processing queue begins with a test of seniority of reception, by the packet switch (1), of the packet whose identifier is stored in the queue list memory (224) at the address pointed to by the auxiliary read pointer (P_{AW}) leading, if the packet proves too old, to bypassing the priority level comparison and to decrementing the auxiliary read pointer (P_{AR}) by one unit.

## Patentansprüche

1. Verfahren zur Verwaltung einer Liste von Paketen in Erwartung einer erneuten Aussendung in einem Ausgangsport (21, 22, 23) einer Paketvermittlung (1), nachdem sie empfangen, von der Paketvermittlung (1) vorübergehend in einem Pufferspeicher (30) angeordnet und mit Hilfe von Kennungen registriert wurden, die explizit oder implizit die Adresse ihres Aufzeichnungsbeginns im Pufferspeicher und ihren Prioritätspegel angeben, wobei das Verfahren **dadurch gekennzeichnet ist, dass** es darin besteht, gleichzeitig die folgenden Aufgaben zu erfüllen:
- erste Aufgabe:
- Anordnen der Kennungen von auf das Senden durch den Ausgangsport wartenden Paketen hintereinander und in der Reihenfolge ihrer Ankunft am Ausgangsport in einer Verarbeitungsschlange, die in einem Wartelistenspeicher gespeichert ist,
- zweite Aufgabe:
1- Initialisieren einer Arbeitsregisterbank, die nachfolgend mit RD bezeichnet wird, mit der Kennung des Pakets, das als letztes in die Verarbeitungsschlange aufgenommen wurde,
2- Ausführen der folgenden Suchschleife (Schritte 2.1 bis 2.4), so lange der Beginn der Verarbeitungsschlange nicht erreicht wurde:
2.1- Auswahl der Paketkennung in der Verarbeitungsschlange, die direkt vor derjenigen liegt, die während der vorhergehenden Schleife ausgewählt wurde,
2.2- Vergleich der Priorität der in der Verarbeitungsschlange gelesenen Paketkennung mit derjenigen der in der RD enthaltenen Paketkennung,
2.3- wenn die Priorität der in der Verarbeitungsschlange gelesenen Paketkennung höher als die oder gleich derjenigen der in der RD enthaltenen Paketkennung ist, Einschreiben der in der RD gespeicherten Paketkennung in die Warteschlange direkt vor der gelesenen Paketkennung und Laden der gelesenen Paketkennung in die RD,
2.4- wenn die Priorität der in der Verarbeitungsschlange gelesenen Paketkennung strikt niedriger als diejenige der in der RD enthaltenen Paketkennung ist, Einschreiben der gelesenen Paketkennung in die Verarbeitungsschlange direkt vor ihr selbst,
3- Präsentieren der in der RD gespeicherten Paketkennung als dem Paket entsprechend, das prioritär vom betroffenen Ausgangsport erneut auszusenden ist,
4- Abwarten der Berücksichtigung der in der RD enthaltenen Paketkennung durch den Ausgangsport,
5- Wiederholung der Schritte 1 bis 4 der zweiten Aufgabe, solange die Verarbeitungsschlange nicht leer ist.

2. Verfahren nach Anspruch 1, **dadurch gekennzeichnet, dass** vor dem Vergleich des Prioritätspegels von zwei in der Verarbeitungsschlange ausgewählten Paketkennungen ein Identitätstest durchgeführt wird, der, wenn die beiden Paketkennungen sich als identisch erweisen, dazu führt, den Prioritätspegelvergleich zu umgehen und die so erfasste Dublette zu lösen, indem die bereits in der Arbeitsregisterbank vorhandene Paketkennung aus der im Wartelistenspeicher (224) gespeicherten Verarbeitungsschlange gelöscht wird.

3. Verfahren nach Anspruch 1, **dadurch gekennzeichnet, dass**, wenn die Paketkennungen eine Information über das Datum des Empfangs der Pakete durch die Paketvermittlung enthalten, vor dem Vergleich des Prioritätspegels von zwei in der Verarbeitungsschlange ausgewählten Paketkennungen ein Test des Empfangsalters durch die Paketvermittlung (1) desjenigen Pakets liegt, dessen Kennung in der Verarbeitungsschlange gelesen wird, was, wenn das Paket sich als zu alt erweist, dazu führt, den Prioritätspegelvergleich zu umgehen und es aus der im Wartelistenspeicher (224) gespeicherten Verarbeitungsschlange auszuschließen.

4. Verfahren nach Anspruch 1, **dadurch gekennzeichnet, dass** die Population der im Wartelistenspeicher (224) gespeicherten Verarbeitungsschlange in Echtzeit erfasst und mit einer Höchstschwelle verglichen wird, oberhalb der kein neues Paket in die Verarbeitungsschlange aufgenommen wird.

5. Verfahren nach Anspruch 1, **dadurch gekennzeichnet, dass** die im Wartelistenspeicher (224) gespeicherte Verarbeitungsschlange einen Adressierungsbereich besetzt, der in Abhängigkeit von in ihr stattfindenden Zugängen und Abgängen von Paketkennungen beweglich ist.

6. Verfahren nach Anspruch 5, **dadurch gekennzeichnet, dass** der bewegliche Adressierungsbereich aus einem Bereich von Adressen besteht, die in der natürlichen Reihenfolge eines Adressengenerator-Zählers mit Rückschleifung lückenlos aufeinander folgen.

7. Verfahren nach Anspruch 6, **dadurch gekennzeichnet, dass** der bewegliche Adressierungsbereich jederzeit durch seine beiden äußersten Grenzen mit Hilfe von zwei Zeigern markiert wird, einem Lesezeiger (P_{L}), der auf die älteste Paketkennung der Verarbeitungsschlange zeigt, und einem Schreibzeiger (P_{E}), der auf die neueste Paketkennung der Verarbeitungsschlange zeigt.

8. Verfahren nach Anspruch 7, **dadurch gekennzeichnet, dass** die paarweisen Vergleiche der in der Verarbeitungsschlange stromaufwärts in der Verarbeitungsschlange vorhandenen Kennungen mittels eines Hilfslesezeigers (P_{AL}), der sich in der Verarbeitungsschlange derart stromaufwärts bewegt, dass er immer auf die im Wartelistenspeicher gespeicherte Paketkennung zeigt, die mit der in der Arbeitsregisterbank (RD) gespeicherten Paketkennung zu vergleichen ist, und mittels eines Hilfsschreibzeigers (P_{AE}) erfolgen, der sich ebenfalls in der Verarbeitungsschlange stromaufwärts bewegt, aber derart, dass er immer auf die Adresse zeigt, die vor derjenigen der letzten nach einem Vergleich wieder in die Verarbeitungsschlange eingefügten Kennung liegt, und die als Adresse der Wiedereinfügung der bei einem laufenden Vergleich nicht behaltenen Paketkennung in die Verarbeitungsschlange genommen wird.

9. Verfahren nach Anspruch 1, **dadurch gekennzeichnet, dass** es aufweist:
- eine Initialisierungsphase, die es ermöglicht, einen Verzweigungspunkt zu erreichen, und die darin besteht:
- in eine in einem Wartelistenspeicher (224) gespeicherte Verarbeitungsschlange nacheinander bei ihrer Ankunft am Ausgangsport (21, 22, 23) die Kennungen der Pakete einzuschreiben, die wieder ausgesendet werden sollen, wobei dieses Einschreiben unter der Überwachung durch einen Einschreibzeigers (P_{E}) erfolgt, der gemäß einer "natürlichen" Adressierordnung inkrementiert wird, die von einem Adressenzähler erzeugt wird, der eine Abtastung des Wartelistenspeichers (224) vor der Rückschleifung durchführt, und
- einen Lesezeiger (P_{L}) auf den Wartelistenspeicher (224) an der Adresse der Paketkennung zu richten, die als älteste in der Verarbeitungsschlange gespeichert wurde,
- eine zweite Phase der Auswahl des wartenden Pakets mit der höchsten Priorität, die nach dem Verzweigungspunkt beginnt und darin besteht:
- abzuwarten, dass die Schreibzeiger (P_{E}) und die Lesezeiger (P_{L}) auf unterschiedliche Adressen zeigen,
- sobald die Schreibzeiger (P_{E}) und die Lesezeiger (P_{L}) auf unterschiedliche Adressen zeigen,
- einen Hilfslesezeiger (P_{AL}) und einen Hilfsschreibzeiger (P_{AE}) in Höhe des Schreibzeigers (P_{E}) zu positionieren und aufeinanderfolgende Elementarzyklen des paarweisen Vergleichs der Prioritätspegel der Paketkennungen durch schrittweise Stromaufwärtsbewegung in der Verarbeitungsschlange zu beginnen, wobei am Ende jedes Zyklus die Paketkennung mit der höchsten Priorität behalten wird, wobei die Zyklen durch eine Übertragung der im Wartelistenspeicher (224) an der vom Hilfslesezeiger (P_{AL}) angezeigten Adresse enthaltenen Paketkennung in eine Arbeitsregisterbank (RD) außerhalb des Wartelistenspeichers (224) und eine Dekrementierung des Hilfslesezeigers (P_{AL}) um eine Einheit beginnen, wobei die Dekrementierung sich auf die natürliche Adressierordnung des Warteschlangenspeichers (224) bezieht, und ein Elementarzyklus aus den folgenden aufeinanderfolgenden Operationen besteht:
- einem Zyklusausgangstest, der darin besteht, den Hilfslesezeiger (P_{AL}) mit dem um eine Einheit dekrementierten Lesezeiger (P_{L}) zu vergleichen und einen Zyklusausgang vorzusehen, wenn eine Gleichheit vorliegt, und ein Rückschleifen am Zyklusende auf einen neuen Zyklusbeginn vorzusehen, wenn keine Gleichheit vorliegt,
- einem Vergleich des in der in der Arbeitsbank (RD) gespeicherten Paketkennung enthaltenen Prioritätspegels mit dem im Wartelistenspeicher (224) an der vom Hilfslesezeiger (P_{AL}) angezeigten Adresse gespeicherten Prioritätspegel,
- einem Einschreiben der nach dem Vergleich nicht behaltenen Paketkennung in den Warteschlangenspeicher (224) an der vom Hilfsschreibzeiger (P_{AE}) angezeigten Adresse,
- nur wenn der Prioritätspegelvergleich zeigt, dass der Prioritätspegel des Pakets, dessen Kennung im Warteschleifenspeicher (224) an der vom Hilfslesezeiger (P_{AL}) angezeigten Adresse gespeichert ist, höher ist als derjenige des Pakets, dessen Kennung in der Arbeitsbank (RD) gespeichert ist, Übertragung der im Wartelistenspeicher (224) an der vom Hilfslesezeiger (P_{AL}) angezeigten Adresse gespeicherten Kennung in die Arbeitsregisterbank (RD), und
- Dekrementierung des Hilfsschreibzeigers (P_{AE}) und des Hilfslesezeigers (P_{AL}) um eine Einheit, was das Ende eines Zyklus darstellt,
am Ausgang des Zyklus:
- Übertragen des Hilfsschreibzeigers (P_{AE}) in den Lesezeiger (P_{L}),
- Auswahl des Pakets, dessen Deskriptor in der Arbeitsregisterbank (RD) gespeichert ist, für eine sofortige Neuaussendung durch den Ausgangsport (21, 22, 23), und
- Rückkehr zum Verzweigungspunkt.

10. Verfahren nach Anspruch 9, **dadurch gekennzeichnet, dass** ein Vergleichszyklus des Prioritätspegels von zwei Paketen der Verarbeitungsschlange mit einem Identitätstest beginnt, der, wenn die beiden Pakete sich als identisch herausstellen, dazu führt, den Prioritätspegelvergleich zu umgehen und den Hilfslesezeiger (P_{AL}) um eine Einheit zu dekrementieren.

11. Verfahren nach Anspruch 9, **dadurch gekennzeichnet, dass**, wenn die Paketkennungen eine Information über das Datum des Empfangs der Pakete durch die Paketvermittlung (1) enthalten, ein Vergleichszyklus des Prioritätspegels von zwei Paketen der Verarbeitungsschlange durch einen Test des Empfangsalters des Pakets durch die Paketvermittlung (1) beginnt, dessen Kennung im Wartelistenspeicher (224) an der Adresse gespeichert ist, die vom Hilfslesezeiger (P_{AL}) angezeigt wird, was dazu führt, wenn das Paket sich als zu alt erweist, den Prioritätspegelvergleich zu umgehen und den Hilfslesezeiger (P_{AL}) um eine Einheit zu dekrementieren.
